# EUROPÄISCHE PATENTANMELDUNG

(11) **EP 3 203 030 A1**
(43) Veröffentlichungstag der Anmeldung: **09.08.2017**
(21) Anmeldenummer: 16204202.2
(22) Anmeldetag: 15.12.2016
(51) Int. Cl.: F01D 5/34, F01D 9/04

(54) **ROTOR-STATOR-VERBUND FÜR EINE AXIALE STRÖMUNGSMASCHINE UND FLUGTRIEBWERK**

(30) Priorität: 02.02.2016 DE 102016201581
(71) Anmelder: MTU Aero Engines AG, 80995 München (DE)
(72) Erfinder: Merkl, Edgar, 85417 Marzling (DE)

(57) **Zusammenfassung**

Die vorliegende Erfindung betrifft einen Rotor-Stator-Verbund (100) für eine axiale Strömungsmaschine, umfassend wenigstens einen Rotor (109) mit einem Laufrad (9) und wenigstens einen Stator (107) mit einem Leitrad (1) und einem Gehäuseabschnitt (7), wobei der Rotor-Stator-Verbund (100) eine einstückige Bauweise bei der Herstellung aufweist und der Gehäuseabschnitt (7) wenigstens einen radialen Zugang (15) aufweist, wobei der radiale Zugang (15) für Montageschritte und/oder Bearbeitungsschritte für innerhalb des Gehäuseabschnitts (7) angeordnete Rotorabschnitte und/oder Statorabschnitte vorbereitet und ausgestaltet ist. Weiterhin betrifft die vorliegende Erfindung ein Flugtriebwerk, aufweisend einen Rotor-Stator-Verbund (100).

## Beschreibung

Die vorliegende Erfindung betrifft einen Rotor-Stator-Verbund für eine axiale Strömungsmaschine gemäß dem Oberbegriff des Anspruchs 1. Des Weiteren betrifft die vorliegende Erfindung ein Flugtriebwerk gemäß Anspruch 12.

Die Herstellung und Montage von Rotoren in ein Gehäuse von Strömungsmaschinen ist sehr komplex, aufwendig und zeitintensiv. Die Rotoren müssen passgenau konstruiert und gefertigt werden, wobei der Montageprozess bei der Konstruktion und der Herstellung der Rotoren in allen Einzelschritten mit einbezogen werden muss. Die Laufräder von Rotoren können in einer integralen Bauweise oder mittels einzelner Laufschaufeln, die mit einem Rotorgrundkörper verbunden werden, hergestellt werden, wobei beide Varianten Vor- und Nachteile aufweisen. Die Leiträder werden in der Regel mittels einzelner Leitschaufeln, die mit dem Gehäuse verbunden werden, gefertigt und montiert. Alle einzelnen Bauteile sollten zudem bezüglich konstruktiver Details, dem Gewicht und der Fertigung und Montage optimiert, insbesondere kostenoptimiert sein. Der gesamte Verbund von den einzeln hergestellten Rotoren und Statoren kann als Rotor-Stator-Verbund bezeichnet werden.

Eine Aufgabe der vorliegenden Erfindung ist es, einen weiteren Rotor-Stator-Verbund für eine axiale Strömungsmaschine vorzuschlagen, der unter Berücksichtigung der genannten Problematik optimiert ist. Ferner ist es Aufgabe der vorliegenden Erfindung, ein Flugtriebwerk mit einem erfindungsgemäßen Rotor-Stator-Verbund vorzuschlagen.

Die erfindungsgemäße Aufgabe wird durch einen Rotor-Stator-Verbund mit den Merkmalen des Anspruchs 1 gelöst. Sie wird ferner durch ein Flugtriebwerk mit den Merkmalen des Anspruchs 12 gelöst.

Erfindungsgemäß wird somit ein Rotor-Stator-Verbund für eine axiale Strömungsmaschine vorgeschlagen, der einerseits wenigstens einen Rotor mit einem Laufrad und andererseits wenigstens einen Stator mit einem Leitrad und einem Gehäuseabschnitt umfasst. Der Rotor-Stator-Verbund weist eine einstückige Bauweise bei der Herstellung auf. Der Gehäuseabschnitt weist wenigstens einen radialen Zugang auf. Der radiale Zugang ist für Montageschritte und/oder Bearbeitungsschritte für innerhalb des Gehäuseabschnitts angeordnete Rotorabschnitte und/oder Statorabschnitte vorbereitet und ausgestaltet.

Ein erfindungsgemäßes Flugtriebwerk weist einen erfindungsgemäßen Rotor-Stator-Verbund auf, wobei der Rotor-Stator-Verbund einen Hochdruckverdichter und/oder eine Hochdruckturbine umfasst.

Vorteilhafte Weiterentwicklungen der vorliegenden Erfindung sind jeweils Gegenstand von Unteransprüchen und Ausführungsformen.

Erfindungsgemäße beispielhafte Ausführungsformen können eines oder mehrere der im Folgenden genannten Merkmale aufweisen.

In bestimmten erfindungsgemäßen Ausführungsformen ist die axiale Strömungsmaschine eine axiale Gasturbine, beispielsweise eine Fluggasturbine. Eine axiale Strömungsmaschine kann als Flugtriebwerk bezeichnet werden. Ein Flugtriebwerk kann einen Verdichter mit mehreren Verdichterstufen und eine Turbine mit mehreren Turbinenstufen umfassen. Verdichterstufen und Turbinenstufen können jeweils mehrere Rotorstufen und mehrere Statorstufen aufweisen.

Der Begriff "Rotor", wie er hierin verwendet wird, kann eine oder mehrere Rotorstufen umfassen, die sich im bestimmungsgemäßen Gebrauch der Strömungsmaschine um eine Rotationsachse oder Drehachse der Strömungsmaschine drehen. Ein Rotor oder eine Rotorstufe kann als Laufrad bezeichnet werden oder ein Laufrad umfassen. Ein Rotor oder eine Rotorstufe kann mehrere Laufräder umfassen. Ein Rotor oder eine Rotorstufe kann mehrere Laufschaufeln und einen Rotorgrundkörper umfassen. Der Rotorgrundkörper kann als Rotorscheibe oder Rotorring bezeichnet werden oder diesen umfassen.

Ein Rotor kann in eine Strömungsmaschine, insbesondere in eine axiale Gasturbine, eingebaut und montiert werden.

Eine materialschlüssige Verbindung (eine materialschlüssige kann als stoffschlüssige Verbindung bezeichnet werden), beispielsweise der Laufschaufeln eines Rotors oder eines Laufrads mit einem Rotorgrundkörper, kann als integrale Verbindung bezeichnet werden. Eine integrale Verbindung kann mittels eines generatives Herstellungsverfahrens gefertigt werden. Ein Rotorgrundkörper mit integral mit dem Rotorgrundkörper verbundenen Schaufeln kann als integral beschaufelter Rotor bezeichnet werden. Ein integral beschaufelter Rotor kann ein sogenannter BLISK (Bladed Disk) oder ein BLING (Blade Ring) sein.

Der Begriff "einstückig", wie er hierin verwendet wird, kann ein körperliches Merkmal eines integralen Bauteils bezeichnen. Insbesondere ist ein einstückiges Bauteil mittels eines einzigen Herstellungsschritts oder Herstellungsverfahrens gefertigt oder hergestellt. Ein einstückiges Bauteil kann mittels eines generatives Herstellungsverfahren gefertigt sein. Ein generatives Herstellungsverfahren ist beispielsweise das selektive Lasersintern (abgekürzt: SLS). Ein generatives Herstellungsverfahren kann als additives Herstellen (englisch: additive manufacturing, abgekürzt: AM) bezeichnet werden. Ein generatives Herstellungsverfahren kann weiterhin als direktes Metalllasersintern (englisch: direct metal laser sintering, abgekürzt: DMLS), selektives Laserschmelzen (englisch: Selective laser melting, abgekürzt SLM) oder als 3d-Drucken bezeichnet werden oder ein solches Verfahren aufweisen. Generative Herstellungsverfahren (der Begriff Herstellungsverfahren wird hier synonym zu Fertigungsverfahren verwendet) können für das sogenannte "Rapid Prototyping" verwendet werden.

Eine einstückige Bauweise bei der Herstellung kann bedeuten, dass ein Bauteil oder eine Baugruppe bei der Herstellung einstückig ist. Eine einstückige Bauweise kann mehrere Einzelbauteile in einem einstückig hergestellten Bauteil aufweisen. So kann beispielsweise ein Rotor, der im späteren bestimmungsgemäßen Gebrauch um ein Achse rotiert, zusammen mit einem Stator, der Leiträder und/oder ein Gehäuse umfassen kann und statisch, also nicht bewegt im späteren bestimmungsgemäßen Gebrauch ist, in einer einstückigen Bauweise bei der Herstellung zusammen und in einem Herstellungsschritt gefertigt werden. Die Trennung der Bauteile nach der einstückigen Herstellung kann beispielsweise mittels Stützstrukturen, Trennfugen, Sollbruchstellen oder anderer Vorkehrungen erzielt werden.

Der Rotor kann zum direkten oder indirekten Verbinden mit einer Welle der Strömungsmaschine ausgestaltet oder vorbereitet sein.

Der Begriff "Stator", wie er hierin verwendet wird, kann ein Gehäuse einer Strömungsmaschine oder einzelne Gehäuseabschnitte bedeuten. Der Stator kann weiterhin Bauteile umfassen, die mit dem Gehäuse verbunden sind. Insbesondere kann ein Leitrad oder einzelne Leitradelemente wie beispielsweise Leitradschaufeln zum Stator gehören. Weiterhin kann ein Innenring, der die Leitschaufeln radial innen miteinander verbindet und radial abschließt, dem Stator hinzugezählt werden. An dem Innenring können weiterhin Einlaufdichtungen, oder zumindest Halterungen oder Vorrichtungen zum Befestigen von Einlaufdichtungen vorgesehen sein. Ebenso können innere Verkleidungen des Gehäuses, Gehäuseabschnitte, Zwischengehäuse oder ähnliches dem Stator hinzugezählt werden.

Ein Rotorabschnitt kann ein Laufrad, eine Laufradschaufel oder beispielsweise das radial äußere Ende von einer oder mehreren Laufradschaufeln umfassen. Ebenso kann ein Rotorabschnitt ein beliebiger anderer Bereich oder Abschnitt des Rotors sein.

Ein Statorabschnitt kann ein Leitrad, eine Leitradschaufel oder beispielsweise die radial äußere Lagerung oder Befestigung der Leitradschaufeln am Gehäuse umfassen. Ebenso kann ein Leitradabschnitt ein beliebiger anderer Bereich oder Abschnitt des Stators sein.

Der Begriff "Verbindungsflansch", wie er hierin verwendet wird, kann ein Bauteil zum, insbesondere formschlüssigen und/oder kraftschlüssigen, Verbinden oder Anflanschen eines Rotor-Stator-Verbundes an oder mit einem angrenzenden Bauteil der Strömungsmaschine bedeuten. Ein Verbindungsflansch kann als Befestigungselement bezeichnet werden.

In einigen erfindungsgemäßen Ausführungsformen ist der Rotor-Stator-Verbund ein Verdichter und/oder eine Turbine oder umfasst eine solche. Ein Verdichter kann beispielsweise ein Hochdruckverdichter oder ein Niederdruckverdichter sein. Eine Turbine kann beispielsweise ein Hochdruckturbine oder eine Niederdruckturbine sein.

In bestimmten erfindungsgemäßen Ausführungsformen umfasst der Rotor-Stator-Verbund eine Brennkammer. Eine Brennkammer ist insbesondere zwischen dem Hochdruckverdichter und der Hochdruckturbine einer Strömungsmaschine, insbesondere einer axialen Gasturbine, angeordnet.

In manchen erfindungsgemäßen Ausführungsformen weist der radiale Zugang eine Verschlusseinrichtung auf. Die Verschlusseinrichtung kann ein Deckel sein, der beispielsweise mit einem geeigneten Verschlussmechanismus wie etwa einem Haken oder Schrauben verschließbar ist. Insbesondere ermöglicht der radiale Zugang einen Zugang, beispielsweise einen manuellen Zugang, für Wartungs- und Reparaturarbeiten sowie Montagearbeiten innerhalb des Rotor-Stator-Verbunds.

In gewissen erfindungsgemäßen Ausführungsformen ist der Rotor-Stator-Verbund aus einem Material hergestellt. Beispielsweise kann es bei der Anwendung eines generativen Fertigungsverfahrens zur Herstellung des Rotor-Stator-Verbunds vorteilhaft sein, nur ein Material, beispielsweise in einem Lasersinterprozess mit Metall, zu verwenden. Das Material kann nach unterschiedlichen Kriterien ausgewählt werden, beispielsweise um eine ausreichende Formstabilität und Festigkeit der einzelnen Bauteile des Rotor-Stator-Verbunds zu gewährleisten.

In einigen erfindungsgemäßen Ausführungsformen ist der Rotor-Stator-Verbund aus wenigstens zwei unterschiedlichen Materialien hergestellt oder weist zwei unterschiedliche Materialien auf. Die unterschiedlichen Materialien können beispielsweise durch unterschiedliche Materialschichten bei einem generativen Herstellungsverfahren aufgetragen werden. Alternativ können unterschiedliche Materialien in Pulverform oder Kugelform für das generative Herstellungsverfahren, beispielsweise für einen Lasersinterprozess verwendet werden. Mittels unterschiedlicher Materialien können vorteilhaft Materialeigenschaften kombiniert werden, die bei einem beispielsweise Gußverfahren oder einem spanenden Herstellungsverfahren des Rotor-Stator-Verbundes nicht möglich wären.

In bestimmten erfindungsgemäßen Ausführungsformen sind die Laufradschaufeln aus einem ersten Material hergestellt oder weisen ein erstes Material auf. Der Gehäuseabschnitt ist in diesem Ausführungsbeispiel wenigstens aus einem zweiten Material hergestellt oder weist ein zweites Material auf, wobei das erste und das zweite Material unterschiedlich sind.

In manchen erfindungsgemäßen Ausführungsformen sind die Laufradschaufeln mit einem Rotorgrundkörper aus dem ersten Material hergestellt. Diese konstruktive Ausführungsform kann als einstückige Form von Laufradschaufeln und Rotorgrundkörper bezeichnet werden.

Diese einstückige Form kann als sogenannter BLISK (Bladed Disk) oder als BLING (Blade Ring) bezeichnet werden. Die einstückige Form von Laufradschaufeln und Rotorgrundkörper kann als integral beschaufelter Rotor bezeichnet werden.

In gewissen erfindungsgemäßen Ausführungsformen sind die Leitradschaufeln aus dem zweiten Material oder einem dritten Material hergestellt oder weisen ein zweites Material oder drittes Material auf.

In einigen erfindungsgemäßen Ausführungsformen weist der Rotor-Stator-Verbund bei der Herstellung eine Stützstruktur und/oder eine Halterungseinrichtung auf. Eine Stützstruktur kann in einem ersten Herstellungsschritt mittels eines generativen Verfahrens aufgebaut werden, um anschließend den eigentlichen Rotor-Stator-Verbund auf dieser Stützstruktur aufzubauen. Die Stützstruktur kann nach der Fertigstellung des Rotor-Stator-Verbunds wieder entfernt werden. Mittels der Stützstruktur kann vorteilhaft darauf verzichtet werden, den Rotor-Stator-Verbund direkt auf eine Grundplatte aufzubauen. Die Stützstruktur kann den Rotor-Stator-Verbund während des schichtweisen Aufbauens stabilisieren und möglicherweise dazu beitragen, Fertigungsgenauigkeiten einzuhalten.

Die Stützstruktur kann Rotorbauteile und Statorbauteile bei der einstückigen Herstellung verbinden, die nach der Herstellung getrennt werden. Damit können vorteilhaft mehrere Bauteile in einem Fertigungsschritt hergestellt.

Die Halterungseinrichtung kann vorteilhaft dazu eingesetzt werden, um den Rotor-Stator-Verbund insbesondere nach einer Herstellung mit einer Stützstruktur zu fixieren und zu halten, um die Stützstruktur zu entfernen.

In bestimmten erfindungsgemäßen Ausführungsformen weist der Rotor-Stator-Verbund wenigstens ein Verbindungsflansch zum Verbinden des Rotor-Stator-Verbunds mit weiteren Bauteilen der Strömungsmaschine auf. Weitere Bauteile können beispielsweise Verdichtersegmente, Turbinensegmente, Brennkammersegmente oder angrenzende Gehäusesegmente sein, um den Rotor-Stator-Verbund in der Strömungsmaschine zu fixieren und montieren. Verbindungsflansche können mittels Schraubenverbindungen mit angrenzenden Flanschen verbunden werden.

Manche oder alle erfindungsgemäßen Ausführungsformen können einen, mehrere oder alle der oben und/oder im Folgenden genannten Vorteile aufweisen.

Mittels des erfindungsgemäßen Rotor-Stator-Verbunds kann der Rotor zusammen mit dem Stator in einem Fertigungsschritt hergestellt werden. Damit kann vorteilhaft auf zusätzliche Flansche oder Nuten verzichtet werden, die in der Regel bei einer Einzelteilfertigung zur Montage notwendig sind.

Weiterhin können mittels des erfindungsgemäßen Rotor-Stator-Verbunds konstruktiv komplizierte Bauteile mit Hinterschneidungen und besonderen Formgebungen in einem Fertigungsschritt herstellen. Der erfindungsgemäße Rotor-Stator-Verbund ermöglicht verschiedenste gestalterische Möglichkeiten für die Konstruktion.

Mittels des erfindungsgemäßen Rotor-Stator-Verbunds können vorteilhaft unterschiedliche Materialien bei der Konstruktion und Herstellung eingesetzt werden. Damit können vorteilhaft neue oder zusätzliche Randbedingungen bezüglich der Strukturmechanik oder der Festigkeit von Rotoren und Statoren im Verbund erzielt werden.

Weiterhin können mittels des erfindungsgemäßen Rotor-Stator-Verbunds weitere gestalterische Optimierungspotentiale erzielt und eröffnet werden, die vorteilhaft zu Gewichtseinsparungen, Herstellkostenreduzierungen und Designoptimierungen führen können.

Die vorliegende Erfindung wird im Folgenden anhand der beigefügten Zeichnung, in welcher identische Bezugszeichen gleiche oder ähnliche Bauteile bezeichnen, exemplarisch erläutert. In der schematisch vereinfachten Figur gilt:

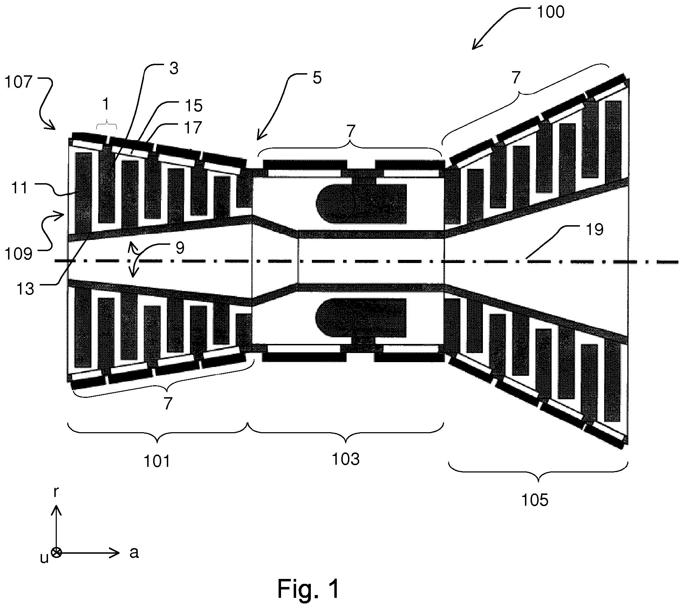

- **Fig. 1**: zeigt einen Rotor-Stator-Verbund gemäß einer Ausführungsform der Erfindung.

**Fig. 1** zeigt einen erfindungsgemäßen Rotor-Stator-Verbund 100 einer axialen Strömungsmaschine mit einem Verdichter 101, einer Brennkammer 103 und einer Turbine 105 in Längsschnittdarstellung.

Der Rotor-Stator-Verbund 100 umfasst einen Stator 107 und einen Rotor 109. Der Stator 107 weist mehrere in Axialrichtung a hintereinander angeordnete Leiträder 1 mit jeweils mehreren über dem Umfang u verteilt angeordneten Leitschaufeln 3 und ein Gehäuse 5 mit einzelnen Gehäuseabschnitten 7 auf. Der Rotor 109 weist mehrere in Axialrichtung a hintereinander angeordnete Laufräder 9 mit jeweils mehreren über dem Umfang u verteilt angeordneten Laufradschaufeln 11 und wenigstens einen Rotorgrundkörper 13 auf.

Das Gehäuse 5 weist in mehreren Gehäuseabschnitten 7 zahlreiche in Axialrichtung a hintereinander angeordnete radiale Zugänge 15 auf, die als radiale Öffnungen ausgeführt sind. Die radialen Öffnungen können über dem Umfang u unterschiedliche Umfangswinkel bzw. Öffnungswinkel aufweisen. Beispielsweise können vier oder mehr Öffnungen mit beispielsweise jeweils einem Umfangswinkel von 20 Grad, 30 Grad oder einem anderen Winkel angeordnet sein. Die radialen Zugänge 15 können als Öffnungen zum Gehäuseinneren bezeichnet werden. Die radialen Zugänge 15 sind mit Verschlusseinrichtungen 17 verschlossen, die als Deckel ausgeführt sind. Die Verschlusseinrichtungen 17 oder Deckel können zusätzlich Haken zum Verschließen und/oder Dichtungen zum luftdichten Abdichten aufweisen (in Fig. 1 nicht dargestellt).

Der Rotor-Stator-Verbund 100 weist weiterhin eine Längsachse 19 auf.

### Bezugszeichenliste

- a: axial; Axialrichtung
- r: Radial; Radialrichtung
- u: Umfangsrichtung
- 100: Rotor-Stator-Verbund
- 101: Verdichter
- 103: Brennkammer
- 105: Turbine
- 107: Stator
- 109: Rotor
- 1: Leitrad
- 3: Leitradschaufel
- 5: Gehäuse
- 7: Gehäuseabschnitt
- 9: Laufrad
- 11: Laufradschaufel
- 13: Rotorgrundkörper
- 15: radialer Zugang
- 17: Verschlusseinrichtung
- 19: Längsachse

## Patentansprüche

1. Rotor-Stator-Verbund (100) für eine axiale Strömungsmaschine, umfassend wenigstens einen Rotor (109) mit einem Laufrad (9) und wenigstens einen Stator (107) mit einem Leitrad (1) und einem Gehäuseabschnitt (7), wobei der Rotor-Stator-Verbund (100) eine einstückige Bauweise bei der Herstellung aufweist und der Gehäuseabschnitt (7) wenigstens einen radialen Zugang (15) aufweist, wobei der radiale Zugang (15) für Montageschritte und/oder Bearbeitungsschritte für innerhalb des Gehäuseabschnitts (7) angeordnete Rotorabschnitte und/oder Statorabschnitte vorbereitet und ausgestaltet ist.

2. Rotor-Stator-Verbund (100) nach Anspruch 1, wobei der Rotor-Stator-Verbund (100) ein Verdichter (101) und/oder eine Turbine (105) ist oder eine solche umfasst.

3. Rotor-Stator-Verbund (100) nach Anspruch 1, wobei Rotor-Stator-Verbund (100) weiterhin eine Brennkammer (103) umfasst.

4. Rotor-Stator-Verbund (100) nach einem der vorangegangenen Ansprüche, wobei der radiale Zugang (15) eine Verschlusseinrichtung (17) aufweist.

5. Rotor-Stator-Verbund (100) nach einem der vorangegangenen Ansprüche, wobei der Rotor-Stator-Verbund (100) aus einem Material hergestellt ist.

6. Rotor-Stator-Verbund (100) nach einem der Ansprüche 1 bis 4, wobei der Rotor-Stator-Verbund (100) aus wenigstens zwei unterschiedlichen Materialien hergestellt ist oder solche aufweisen.

7. Rotor-Stator-Verbund (100) nach dem vorangegangenen Anspruch, wobei die Laufradschaufeln (3) aus einem ersten Material hergestellt sind oder ein solches aufweisen und wenigstens ein Gehäuseabschnitt (7) aus einem zweiten Material hergestellt ist oder ein solches aufweist, wobei das erste und das zweite Material unterschiedlich sind.

8. Rotor-Stator-Verbund (100) nach einem der beiden vorangegangenen Ansprüche, wobei die Laufradschaufeln (3) mit einem Rotorgrundkörper (13) aus dem ersten Material hergestellt sind.

9. Rotor-Stator-Verbund (100) nach einem der vorangegangenen Ansprüche, wobei die Leitradschaufeln (3) aus dem zweiten Material oder einem dritten Material hergestellt sind oder ein solches aufweisen.

10. Rotor-Stator-Verbund (100) nach einem der drei vorangegangenen Ansprüche, wobei der Rotor-Stator-Verbund (100) bei der Herstellung eine Stützstruktur und/oder eine Halterungseinrichtung aufweist.

11. Rotor-Stator-Verbund (100) nach einem der vorangegangenen Ansprüche, wobei der Rotor-Stator-Verbund (100) wenigstens ein Verbindungsflansch zum Verbinden des Rotor-Stator-Verbunds (100) mit weiteren Bauteilen der Strömungsmaschine aufweist.

12. Flugtriebwerk, aufweisend einen Rotor-Stator-Verbund (100) nach einem der vorangegangenen Ansprüche, wobei der Rotor-Stator-Verbund (100) einen Hochdruckverdichter und/oder eine Hochdruckturbine umfasst.
